# FASCICULE DE BREVET EUROPEEN

(11) **EP 3 083 082 B1**
(45) Date de publication et mention de la délivrance du brevet: **06.06.2018**
(21) Numéro de dépôt: 14830845.5
(22) Date de dépôt: 19.12.2014
(51) Int. Cl.: B05D 7/14, B21D 51/22, B05D 3/02, C23C 18/00

(54) **PROCEDE DE FABRICATION D'UN ARTICLE CHAUFFANT MUNI D'UN REVETEMENT SOL-GEL**
VERFAHREN ZUR HERSTELLUNG EINES ERHITZUNGSARTIKELS MIT EINEM SOL-GEL-ÜBERZUG
METHOD OF MANUFACTURING A HEATING ARTICLE PROVIDED WITH A SOL-GEL COATING

(30) Priorité: 20.12.2013 FR 1363221
(43) Date de publication de la demande: 26.10.2016
(73) Titulaire: SEB S.A., 69130 Ecully (FR)
(72) Inventeur: BERRUX, Aurélien, F-73290 La Motte Servolex (FR); DUBANCHET, Aurélien, F-73100 Gresy sur Aix (FR); RUBIO, Martin, F-74150 Rumilly (FR)
(74) Mandataire: Rivière, Sophie
(86) Numéro de dépôt international: PCT/FR2014/053476
(87) Numéro de publication internationale: WO 2015/092332

(56) Documents cités:
- EP-A1- 1 457 266
- EP-A1- 1 457 267

## Description

La présente invention concerne de manière générale un procédé de fabrication d'un article comportant un support muni d'un revêtement sol-gel. La présente invention concerne en particulier un procédé comportant une étape d'emboutissage réalisée après l'application du revêtement sol-gel sur le support.

Le domaine visé est en premier lieu celui des articles chauffants, et en particulier celui des articles culinaires.

Par article chauffant, on entend, au sens de la présente invention, un article qui possède son propre système de chauffage ou un article qui est chauffé par un système extérieur et qui est apte à transmettre l'énergie calorifique apportée par ce système à un matériau ou objet tiers au contact dudit article, ou encore un article qui est destiné à recevoir un autre article préalablement chauffé.

Par revêtement sol-gel, on entend au sens de la présente invention un revêtement synthétisé par voie sol-gel à partir d'une solution à base de précurseurs en phase liquide, qui se transforme en un solide par un ensemble de réactions chimiques (hydrolyse et condensation) à basse température. Le revêtement ainsi obtenu peut être soit organo-minéral, soit entièrement minéral.

Par revêtement organo-minéral, on entend au sens de la présente invention, un revêtement dont le réseau est essentiellement inorganique, mais qui comporte des groupements organiques, notamment en raison des précurseurs utilisés et de la température de cuisson du revêtement ou en raison de l'incorporation de charges organiques.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxysilane (TEOS) avec une température de cuisson qui peut être inférieure à 400°C.

Depuis quelques années, on recourt de plus en plus aux revêtements sol-gel à la place des revêtements à base de résines fluorocarbonées comme le polytétrafluoroéthylène (PTFE), pour réaliser des revêtements antiadhésifs d'articles culinaires. Mais les revêtements de type sol-gel sont toujours appliqués sur des articles en forme, emboutis au préalable, car le réseau inorganique ne peut se déformer sans se fissurer. Cela se traduirait par une baisse significative de l'adhérence au substrat du revêtement sol-gel, ainsi qu'une moins bonne résistance à la pénétration des graisses dans le cas d'un article culinaire en utilisation. Sur le plan industriel, les revêtements sol-gel sont appliqués sur des articles déjà emboutis. Ils ne peuvent donc pas être appliqués par les nombreuses techniques d'enduction à plat (sérigraphie, rouleau, jet d'encre, rideau...), et sont généralement enduits par pulvérisation au pistolet pneumatique. Il en résulte une perte importante de produit lors de la pulvérisation (selon la forme de la pièce, la perte peut représenter entre 30 et 70 % de la composition sol-gel appliquée), et une problématique d'overspray sur la face opposée à la face enduite qui peut se révéler délicate à gérer.

Ce n'est pas le cas des revêtements fluorocarbonés (présentant une aptitude à la déformation, notamment à l'étirabilité), qui peuvent se déformer et s'emboutir, et donc être appliqués sur des supports plans par des procédés d'enduction à plat, avant d'être traités thermiquement, puis emboutis pour obtenir la forme souhaitée.
Le document EP 1 457 266 décrit notamment un procédé de revêtement mettant en oeuvre un précurseur sol-gel de type alcoxyde métallique. Pour remédier à ces inconvénients, la demanderesse a mis au point un procédé dans lequel on réalise la mise en forme de l'article par une étape d'emboutissage d'une pièce métallique préalablement revêtue sur au moins l'une de ses faces d'un revêtement sol-gel, grâce à un traitement de précondensation adapté de la couche sol-gel préalablement à l'emboutissage.

Plus particulièrement, la présente invention a pour objet un procédé de fabrication d'un article culinaire, caractérisé en ce qu'il comprend les étapes suivantes :
a) fourniture d'un support sous forme d'une préforme présentant au moins deux faces opposées ;
b) préparation d'une composition sol-gel comprenant au moins un précurseur sol-gel de type alcoxyde métallique ;
c) hydrolyse dudit précurseur sol-gel par introduction d'eau et d'un catalyseur acide ou basique, suivie d'une réaction de condensation ;
d) application sur au moins l'une des faces du support d'au moins une couche de ladite composition sol-gel d'épaisseur comprise entre 5 et 120 µm, pour réaliser une couche de revêtement sol-gel ; puis
e) traitement thermique de solidification de ladite couche de revêtement sol-gel.

Selon l'invention, le procédé comprend en outre, entre l'étape d) d'application de la composition sol-gel et l'étape e) de traitement thermique, les deux étapes successives suivantes :
d') pré-densification de la préforme ainsi revêtue pour obtenir une couche de revêtement sol-gel présentant une dureté crayon comprise dans la gamme 4B à 4H ; puis
d") emboutissage de ladite préforme jusqu'à obtenir la forme finale de l'article culinaire, avec une face intérieure apte à recevoir des aliments et une face extérieure destinée à être disposée du côté d'une source de chaleur, la face emboutie pouvant être soit la face munie de la couche de revêtement sol-gel, soit la face qui lui est opposée.

La possibilité de pouvoir emboutir (ou aptitude à l'emboutissage) une préforme revêtue d'au moins une couche de revêtement sol-gel, grâce au procédé selon l'invention, apporte de nombreux avantages tant sur le plan industriel que sur le plan des possibilités esthétiques conférées aux articles culinaires.

Ainsi, grâce au procédé selon l'invention, il est possible d'utiliser pour la réalisation de l'étape d) d'application de la composition sol-gel, les techniques d'enduction à plat, qui permettent d'une part une économie importante de consommation de revêtement d'un point de vue industriel, et d'autre part la suppression de la problématique de pulvérisation en dehors de l'article (ou « *overspray* » en anglais).

De plus, travailler sur du métal plat avant enduction du revêtement simplifie les étapes de préparation de surface (sablage, dégraissage, décapage chimique...)

Sur le plan esthétique, il est également très avantageux de procéder à l'enduction de la composition sol-gel sur la préforme par les techniques à plat, car ces techniques donnent accès à des possibilités de décoration plus importantes. En effet, il est bien plus aisé de créer du décor sur des disques plats (par flexographie, rouleau, jet d'encre, ou à l'aide de plusieurs couches de sérigraphie...), qu'avec la technique de pulvérisation (qui nécessite l'utilisation de caches), ou la technique d'insertion de décor par tampographie sur le fond de l'article...).

Dans le procédé selon l'invention, on utilise à titre de support une préforme présentant au moins deux faces opposées.

De manière avantageuse, il s'agit d'un support métallique. Le support peut avantageusement être en aluminium, ou en acier, notamment inoxydable, ou en cuivre, ou en titane, ou un multicouches des métaux précités.

De préférence, la préforme, notamment métallique, peut être un support plan (par exemple sous forme d'un disque).

De manière avantageuse, le procédé selon l'invention pourra comprendre en outre, préalablement à l'étape d) d'application de la composition sol-gel, une étape a') de traitement de surface de la face destinée à être revêtue. Ce traitement de surface peut consister en un traitement chimique (décapage chimique notamment) ou mécanique (sablage, brossage, émerisage, grenaillage par exemple) ou encore physique (notamment par voie plasma), afin de créer une rugosité qui sera favorable à l'adhérence de la couche de revêtement sol-gel. Le traitement de surface peut en outre être avantageusement précédé d'une opération de dégraissage destinée à nettoyer la surface.

La composition sol-gel du procédé selon l'invention est obtenue par hydrolyse du précurseur sol-gel en ajoutant de l'eau et un catalyseur acide ou basique, puis par réaction de condensation conduisant à l'obtention 'de la composition sol-gel.

La composition sol-gel du procédé selon l'invention comprend au moins un précurseur sol-gel de type alcoxyde métallique.

On utilise de préférence à titre de précurseur un alcoxyde métallique répondant à la formule générale (1) :

(1) RₙM(OR')₍₄₋ₙ₎,

avec :
- R désignant un groupement alkyle ou phényle,
- R' désignant un groupement alkyle,
- M désignant un métal ou un non métal choisi parmi Si, Zr, Ti, Al, V, Ce, ou La, et
- n étant compris entre 0 et 3

De manière avantageuse, le groupe alcoxyle OR' de l'alcoxyde métallique de formule (1) est un méthoxy ou un éthoxy.

De préférence, l'alcoxyde métallique répondant à la formule générale (1) est un alcoxysilane, en raison de la réactivité élevée des silanes, de leur stabilité réactionnelle et de leur faible cout.

Afin d'améliorer les propriétés de déformation de la (ou des) couche(s) de revêtement sol-gel ainsi que son adhérence au substrat métallique, dans un mode de réalisation de l'invention, la composition sol-gel peut comporter en outre au moins un alcoxyde métallique avec une fonction non hydrolysable au niveau de l'élément M, par exemple un groupement de type alkyle ou phényle.

Selon une première variante de ce mode de réalisation, le groupement alkyle de la fonction non hydrolysable peut être est un groupement méthyle, ce qui correspond à l'alcoxysilane MTES (méthyltriéthoxysilane).

Selon une deuxième variante de ce mode réalisation, le procédé est caractérisé en ce que la composition sol-gel comporte en outre au moins un alcoxyde métallique répondant à la formule générale (1) :

(1) RₙM(OR')₍₄₋ₙ₎,

avec :
- R' désignant un groupement alkyle,
- M désignant un métal ou un non métal choisi parmi Si, Zr, Ti, Al, V, Ce, ou La, et
- n étant compris entre 0 et 3 ; et
- R représentant une fonction non hydrolysable, la fonction non hydrolysable étant un groupement de type phényle ou une chaine alkyle terminée par un groupement de type amino, vinyl, methacryl, epoxy.

Selon cette deuxième variante, le groupement alkyle de la fonction non hydrolysable peut comprendre une double liaison éthylénique, une fonction amine une fonction methacrylique ou une fonction époxyde. Dans un tel mode de réalisation,le groupement alkyle peut avantageusement être choisi parmi l'aminopropyle, le méthacryloxypropyle, le glycidoxypropyle, qui correspondent respectivement aux alcoxysilanes suivants : l'APTES (3-amino-propyltriéthoxysilane), le VTEO (vinyltriéthoxysilane), le MPTES (3-méthacryloxypropyltriéthoxysilane), le GPTES (3-glycidoxypropyltriéthoxysilane).

Une autre alternative pour la composition sol-gel peut être avantageusement l'utilisation d'un silane avec une fonction phenylée, par exemple un phenyltriéthoxysilane (silane répondant à la formule générale (1) avec R désignant un groupement phényle), qui par répulsion stérique offrira une plus grande souplesse lors de la phase d'emboutissage.

De plus, afin d'améliorer la flexibilité de la couche de revêtement sol-gel (film sec avant cuisson), et donc son aptitude à la déformation pour l'étape d'emboutissage, on peut avantageusement incorporer à la composition sol-gel du procédé de l'invention des charges organiques ou inorganiques capables d'absorber les contraintes.

A titre d'exemples de charges organiques utilisables dans le cadre du procédé selon l'invention, on peut notamment citer la poudre de PTFE (par exemple celle commercialisée sous la dénomination commerciale BYK CERAFLOUR 998® par la société BYK-Chemie), les billes de silicone (par exemple, celles commercialisées par SHIN ETSU sous la dénomination commerciale X52 7030), les résines silicones (par exemple celle commercialisée par la société WACKER sous les dénominations commerciales WACKER HK et SILRES® 610), les silicones hybridés époxydes (Tego Silikopon EF), les silicones fluorés, les polysilsesquioxanes linéaires ou tridimensionnels (notamment sous forme liquide ou pulvérulente, par exemple ceux commercialisés par SHIN ETSU sous les dénominations commerciales KMP 594, X52 854), la poudre de polysulfure d'éthylène (PES), la poudre de polyétheréthercétone (PEEK), la poudre de polysulfure de phényle (PPS), ou de perfluoropropylvinyléther (PFA), la poudre d'hexafluoropropène (FEP), les résines poudre de polyuréthanes, les résines acryliques et leurs mélanges.

A titre d'exemples de charges inorganiques utilisables dans le cadre du procédé selon l'invention, on peut notamment citer les charges inorganiques de type charges lubrifiantes, se présentant de préférence sous forme de lamelles. Il s'agit par exemples de charges choisies parmi l'alumine, le nitrure de bore, le sulfure de molybdène, ou le graphite.

Une première composition sol-gel, utilisable dans le procédé selon l'invention et destinée à être appliquée par sérigraphie sur la préforme, pourra avantageusement comprendre un mélange de méthyltriéthoxysilane (MTES) et de tétraéthoxysilane (TEOS), et de préférence un mélange de MTES, de TEOS, et de phenyltriéthoxysilane à titre de précurseurs sol-gel.

Une deuxième composition sol-gel, utilisable dans le procédé selon l'invention et destinée à être appliquée par sérigraphie sur la préforme, pourra avantageusement comprendre un mélange de méthyltriéthoxysilane (MTES) et de tétraéthoxysilane (TEOS) à titre de précurseurs sol-gel, et de l'alumine à titre de charge.

Une troisième composition sol-gel, utilisable dans le procédé selon l'invention et destinée à être appliquée par pulvérisation sur la préforme, pourra avantageusement comprendre du MTES à titre de précurseur sol-gel, de l'alumine et de la poudre de PTFE à titre de charges.

Une fois la formulation de la composition sol-gel du procédé selon l'invention achevée, on applique, sur l'une au moins des faces du support, au moins une couche de ladite composition sol-gel en une épaisseur comprise entre 5 et 120 µm (gamme indiquée pour une couche de revêtement humide, avant séchage et cuisson), pour réaliser une couche de revêtement sol-gel.

Cette application peut être réalisée par sérigraphie, au rouleau, par jet d'encre, par pulvérisation, ou par rideau.

Après application de la composition sol-gel sur au moins l'une des faces de la préforme, on réalise une étape de pré-densification de la préforme ainsi revêtue pour amener le film à une dureté crayon comprise entre 4B et 4H.

Par dureté crayon, on entend au sens de la présente invention la résistance des revêtements ou des laques à des rayures superficielles. Cette dureté traduit donc de manière indirecte un état d'avancement de la condensation du sol-gel. Cette étape de pré-densification de la couche de revêtement sol-gel peut avantageusement consister en une étape de séchage à une température comprise entre 20°C et 150°C, et plus particulièrement en une étape de séchage forcé à une température comprise entre 90°C et 150°C dans un four de cuisson classique. De préférence, dans une telle configuration avec séchage forcé du procédé selon l'invention, la durée du séchage pourra être comprise entre 30 secondes et 5 minutes.

Mais, pour réaliser cette étape de pré-densification, il est également possible d'utiliser les techniques suivantes : séchage en étuve, séchage aux ultraviolets, séchage aux infrarouges, séchage par plasma....

Cette étape de pré-densification est immédiatement suivie de l'étape d'emboutissage de ladite préforme conduisant à l'obtention de la forme finale de l'article culinaire, avec une face intérieure apte à recevoir des aliments et une face extérieure destinée à être disposée du côté d'une source de chaleur. Avec le procédé selon l'invention, il est possible d'emboutir la préforme soit du coté de la face munie de la couche de revêtement sol-gel, soit du coté de la face qui lui est opposée.

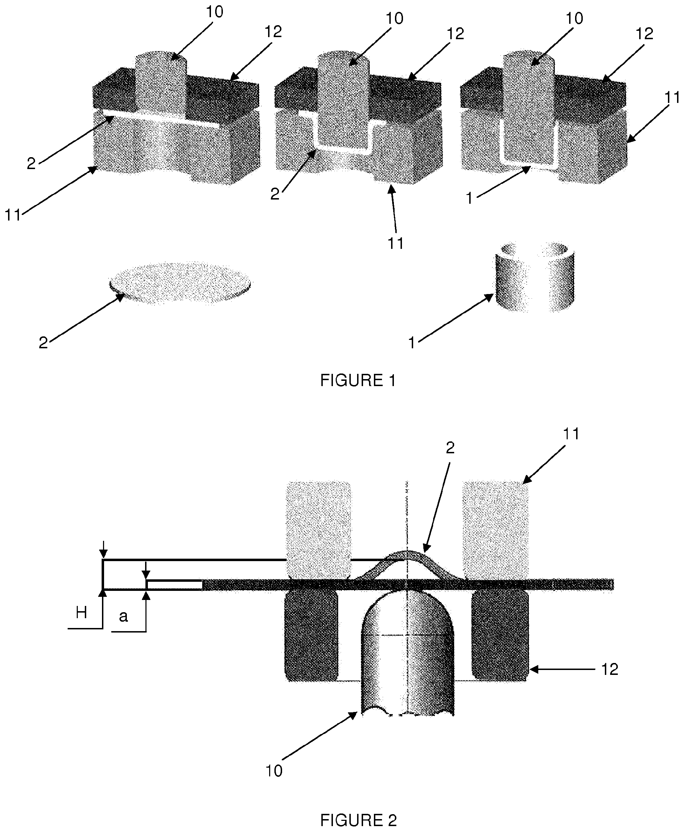

L'emboutissage est un procédé de formage qui consiste à transformer une tôle plane en une forme creuse de géométrie plus ou moins complexe. Ce procédé nécessite typiquement une presse hydraulique ou mécanique équipée d'un outillage constitué essentiellement d'un poinçon 10 et d'une matrice 11, comme illustré sur la figure 1. En général, on ajoute un serre-flan 12 pour prévenir le plissement de la tôle en périphérie du poinçon 10. Le matériau constitutif de la préforme 2 (en général un métal) subit une déformation permanente lorsque la tôle est entrainée par le poinçon 10 dans la matrice 11. On nomme « embouti » 1 le corps creux avec une paroi plus ou moins cylindrique et un fond, obtenu par emboutissage.

S'il n'y a pas de variation de l'épaisseur du flanc au niveau des parois de l'embouti, on parle d'emboutissage sans étirage.

Cependant, dans certains cas, on réalise un emboutissage avec étirage, ce qui présente l'avantage, pour un diamètre d'embouti donné, de pouvoir partir d'un flanc de diamètre inférieur.

Après l'étape de mise en forme de l'article, on réalise enfin l'étape de cuisson finale de la couche de revêtement sol-gel, qui achève la densification du réseau. On procède donc à un traitement thermique de l'article à une température comprise entre 150 et 350°C.

La présente invention a également pour objet un article chauffant susceptible d'être obtenu par le procédé selon l'invention.

A titre d'exemples d'articles chauffants utilisables selon la présente invention, on peut notamment citer les articles culinaires (tels que des poêles sauteuses, casseroles, woks, crêpières, fait-tout, marmites, cocottes...), ou les couvercles chauffants et les bols mixeurs chauffants d'appareils de préparation de nourriture ou de boisson. Mais la présente invention peut également concerner tout autre type de surface et d'articles, tels que des articles de table comme des dessous de plat, des semelles d'un fer à repasser, des fers à friser, et des fers à lisser, des radiateurs, des porte-serviettes ou des poêles à bois, ou des plaques de barbecue, des coffres de barbecue ou des cuves de barbecue, des capots de chauffe plat.

D'autres avantages et particularités de la présente invention résulteront de la description qui va suivre, donnée à titre d'exemple non limitatif et faite en référence aux exemples et aux figures annexées correspondantes :
- la figure 1 représente une vue schématique en coupe d'une presse hydraulique typique dans différents états d'emboutissage d'un préforme;
- la figure 2 est une illustration du test Erichsen utilisé dans les exemples ;
- la figure 3 est une illustration du test Swift utilisé dans les exemples ; et
- la figure 4 est une illustration du test Dureté crayon utilisé dans les exemples.

Les éléments identiques représentés sur les figures 1 à 3 sont identifiés par des références numériques identiques.

L'invention est illustrée plus en détail dans les exemples suivants.

Dans ces exemples, sauf indication contraire, tous les pourcentages et parties sont exprimés en pourcentages massiques.

### EXEMPLES

### Produits

**Supports :** supports plan en aluminium

### Compositions :

### Composition sol-gel SG1 de couleur noire (pour application par sérigraphie) à base de MTES et de TEOS.

La composition de SG1 est donnée ci-après, dans le tableau 1 ci-dessous :

| **Composants** | **Pourcentages massiques** |
|---|---|
| MTES | 38,5 |
| TEOS | 13,3 |
| Propan-2-ol | 1,9 |
| Terpinéol | 8,5 |
| Silice colloïdale 40 % | 22,2 |
| Acide chlorhydrique | 0,4 |
| Additif mouillant | 0,9 |
| Huile silicone réactive | 0,9 |
| Pigment noir (oxyde de fer) | 7,7 |
| Charge inorganique : alumine | 0,9 |
| Billes en acier inoxydable | 2,1 |
| Additif rhéologique cellulosique (Dow Ethocel STD 20) | 2,7 |
| TOTAL | 100 |

### Composition sol-gel SG2 de couleur cuivre (pour application par sérigraphie) à base de MTES et de TEOS et d'un silane phénylé.

La composition de SG2 est donnée ci-après, dans le tableau 2 ci-dessous :

| **Composants** | **Pourcentages massiques** |
|---|---|
| MTES | 35,5 |
| TEOS | 10,3 |
| Phényl silane | 5 |
| Propan-2-ol | 1,9 |
| Terpinéol | 8,5 |
| Silice colloïdale 40 % | 22,2 |
| Acide chlorhydrique | 0,4 |
| Additif mouillant | 0,9 |
| Huile silicone réactive | 0,9 |
| Paillettes de mica-titane cuivrées | 4,5 |
| Charge inorganique : alumine | 0,4 |
| Billes en acier inoxydable | 4,4 |
| Additif rhéologique cellulosique (Dow Ethocel STD 20) | 2,6 |
| TOTAL | 100 |

### Composition sol-gel SG3 de couleur cuivre (pour application par sérigraphie) à base de MTES et de TEOS et de charges polymériques (pour le renfort physique)

La composition de SG3 est donnée ci-après, dans le tableau 3 ci-dessous :

| **Composants** | **Pourcentages massiques** |
|---|---|
| MTES | 38,5 |
| TEOS | 13,3 |
| Propan-2-ol | 1,9 |
| Terpinéol | 8,5 |
| Silice colloïdale 40 % | 22,2 |
| Acide chlorhydrique | 0,4 |
| Additif mouillant | 0,9 |
| Huile silicone réactive | 0,9 |
| Pigment noir (oxyde de fer) | 7,7 |
| Charges organiques : polysilsesquioxanes | 0,5 |
| Charge inorganique : alumine | 0,4 |
| Billes en acier inoxydable | 2,1 |
| Additif rhéologique cellulosique (Dow Ethocel STD 20) | 2,7 |
| TOTAL | 100 |

### Composition sol-gel incolore de finition SF1 (pour application par sérigraphie) à base de MTES et de TEOS.

La composition de SF1 est donnée ci-après, dans le tableau 4 ci-dessous :

| **Composants** | **Pourcentages massiques** |
|---|---|
| MTES | 45,5 |
| TEOS | 17,1 |
| Propan-2-ol | 1,9 |
| Terpinéol | 8,5 |
| Silice colloïdale 40 % | 22,2 |
| Acide chlorhydrique | 0,4 |
| Additif mouillant | 0,9 |
| Huile silicone réactive | 0,9 |
| Additif rhéologique cellulosique (Dow Ethocel STD 20) | 2,6 |
| TOTAL | 100 |

### Composition sol-gel SG4 (pour application par pulvérisation) à base de MTES uniquement.

La composition de SG4 est donnée ci-après, dans le tableau 5 ci-dessous :

| **Composants** | **Solution** | **Pourcentages massiques** |
|---|---|---|
| Silice colloïdale à 30 % dans l'eau | A | 27 |
| Eau distillée | A | 7 |
| Isopropanol | A | 5 |
| Butylglycol | A | 3 |
| Pigment noir FA1220 | A | 12 |
| Alumine | A | 8,3 |
| Tensioactif fluoré | A | 2 |
| PTFE poudre | A | 3 |
| MTES | B | 32,2 |
| Acide formique | B | 0,5 |
| TOTAL | | 100 |

### Composition sol-gel incolore de finition SF2 (pour application par pulvérisation) à base de MTES uniquement.

La composition de SF2 est donnée ci-après, dans le tableau 6 ci-dessous :

| **Composants** | **Solution** | **Pourcentages massiques** |
|---|---|---|
| Silice colloïdale à 30 % dans l'eau | A | 27,5 |
| Eau distillée | A | 10 |
| Isopropanol | A | 5 |
| Butylglycol | A | 9 |
| MTES | B | 35,1 |
| TEOS | B | 13 |
| Acide formique | B | 0,4 |
| TOTAL | | 100 |

### Tests

### TEST ERICHSEN :

Cet essai consiste à emboutir des plaquettes 2 d'aluminium bloquées entre un serre-flan 12 et une matrice 11 sur un poinçon 10 terminé par une calotte sphérique, comme illustré sur la figure 2.

Le test Erichsen utilisé dans le cadre de la présente invention consiste à réaliser des essais à différentes hauteurs de pénétration (H)du poinçon 10. A l'issue de chaque essai, on évalue le comportement du revêtement sol-gel.

La hauteur maximale de pénétration est variable en fonction de l'épaisseur (a) du flanc d'aluminium car on ne doit pas avoir de striction du métal.

Pour nos essais, nous allons évaluer les revêtements sol-gel pour les hauteurs d'Erichsen suivantes : 3, 5, 7 et 9 mm, toujours sur les mêmes plaquettes d'aluminium (nuance 3003 recuit, épaisseur 2,4 mm) préalablement sablées et dégraissées.

### TEST SWIFT :

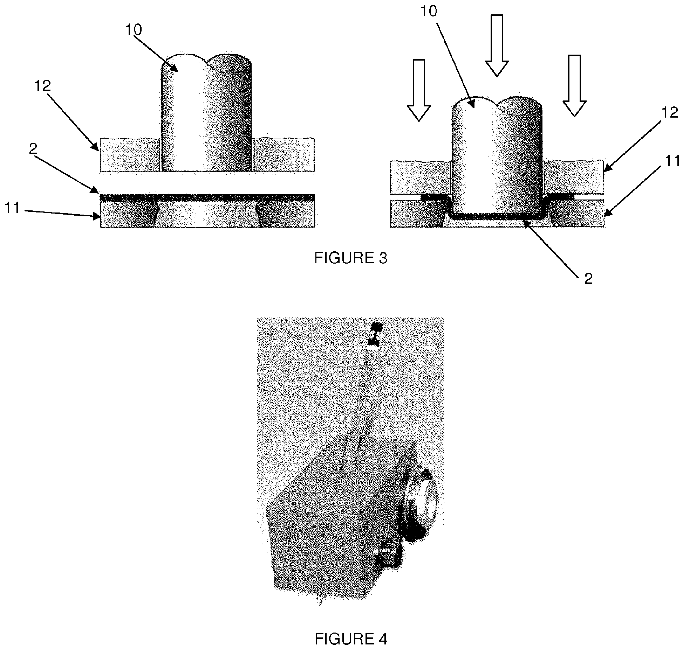

Cet essai consiste à emboutir un godet cylindrique en une passe. Généralement, le diamètre du poinçon 10 est de 33 mm et la pression du serre flanc 12 est ajustée pour éviter la formation de plis lors du rétreint de la tôle 2, comme illustré sur la figure 3.

Le diamètre de la matrice 11 est variable selon l'épaisseur (a) du flanc et le taux d'étirage souhaité, comme indiqué dans le tableau 7 ci-après :

| **% d'étirage** | **Diamètre matrice en mm** |
|---|---|
| 0 | 33 + 2a |
| 5 | 33 + 2 x 0,95a |
| 10 | 33 + 2 x 0,90a |
| 15 | 33 + 2 x 0,85a |

Le test Swift consiste à évaluer le comportement du revêtement sol-gel après emboutissage de plaquettes d'aluminium à l'aide du dispositif illustré sur la figure 3 selon les conditions suivantes : 0 %, 5 % et 10 % d'étirage. On utilise le même type de plaquettes d'aluminium que pour le test Erichsen.

### Dureté crayon selon la norme ISO 15184 (Wolf Wilburn):

L'objectif visé par ce test destructif de dureté normé est de déterminer la résistance du revêtement sol-gel aux rayures superficielles. Ce test fournit une mesure rapide permettant de valider que les conditions retenues (couple temps-température) sont adaptées.

Dans le cadre de la présente invention, ce test a été adapté et utilisé pour quantifier la dureté de la surface de la couche de revêtement sol-gel juste après l'étape de prédensification d') et avant l'opération d'emboutissage d").

Cette quantification de la dureté est corrélée à l'état physique du revêtement après densification (observation macro et microscopique). La quantification de la dureté après prédensification permet de s'affranchir des multiples techniques de pré-densification possibles dans le cadre de la présente invention (séchage en étuve, UV, IR, plasma, voire même séchage prolongé à température ambiante).

Le principe du test est d'appliquer, via un crayon de dureté donnée (cf. ci-dessous) qui est disposé dans un mobile (comme illustré sur la figure 4), une pression fixe de 7,5N et un angle fixe de 45 degrés sur la surface a tester.

La surface du revêtement dont on teste la dureté doit être lisse. On commence le premier test à l'aide d'un crayon de grade moyen, 2H par exemple, puis on examine le revêtement (en termes de pénétration et destruction). Si le revêtement testé est intact après le premier test, il faut recommencer le test avec un crayon de dureté supérieure selon l'échelle indiquée ci-dessous.

Il est nécessaire de répéter le test en utilisant différentes mines, jusqu'à ce que l'on trouve les deux crayons de duretés voisines limites : l'un qui détruit le revêtement, et l'autre qui ne le détruit pas.

Le résultat noté dans le tableau de résultats ci-après est celui qui raye la surface testée. La dureté d'un crayon est évaluée d'après l'échelle ci-dessous :

| | |
|---|---|
| 9H | mine très dure (ou sèche) |
| 8H | |
| 7H | |
| 6H | |
| 5H | mine dure |
| 4H | |
| 3H | |
| 2H | |
| H | |
| F | |
| HB | mine de dureté moyenne |
| B | |
| 2B | |
| 3B | |
| 4B | |
| 5B | |
| 6B | |
| 7B | |
| 8B | |
| 9B | mine très tendre (ou grasse) |

### EXEMPLE 1 :

### Préparation et application par sérigraphie d'une couche de composition sol-gel SG1, SG2 ou SG3, sur laquelle on applique de manière optionnelle une couche incolore de finition SF1.

Les compositions sol-gel SG1, SG2, SG3 et SF1 sont préparées comme suit :
- réaction des silanes avec l'eau, l'acide et la silice colloïdale afin d'obtenir le liant du revêtement sol gel sérigraphiable selon l'invention (la réaction est assez rapide (de quelques minutes à 1 heure en fonction de la quantité de composition à produire))
- après stabilisation et refroidissement du liant sol gel ainsi formé, ajout des pigments et les charges progressivement, sous dispersion ;
- puis, incorporation des différents additifs et tensioactifs ;
- après quelques heures de repos, la pâte est prête pour être sérigraphiée ;
- la pâte peut être stockée en réfrigérateur ou à température ambiante afin de garantir une stabilité rhéologique maximale de plusieurs jours voir plusieurs semaines.

Le revêtement est appliqué en au moins une couche d'épaisseur de 2 à 40 microns par sérigraphie. Plusieurs couches peuvent être appliquées successivement sur l'une des faces de la plaquette en aluminium, avec un séchage optionnel entre chaque couche.

On peut de manière optionnelle appliquer une couche de la composition de finition sol-gel translucide SF1 sur la ou les couches de composition de revêtement sol-gel SG1, SG2 ou SG3 sol-gel colorées décrites ci-dessus.

On peut également de manière optionnelle incorporer un décor fonctionnel ou non fonctionnel entre la couche sol-gel colorée SG1, SG2 ou SG3 et la couche de finition SF1.

Pour réaliser l'adjonction de ce décor entre les couches, on pourra appliquer sur la première couche colorée de revêtement sol-gel un décor se présentant sous forme d'au moins une couche discontinue comprenant au moins une substance chimique optiquement non transparente.

A titre de substances chimiques optiquement non transparentes utilisables dans la couche de décor selon l'invention, on peut ainsi citer les pigments thermostables, les pigments thermochromes, les paillettes, et leurs mélanges. Les pates décor peuvent être formulées avec des liants de type alcoxysilanes (on parlera alors de pate décor solgel), des liants de type résines silicones, polyesters, silicone-polyesters, acryliques, ou même sans liant particulier.

La ou les couches de décor peuvent par exemple être appliquées par tampographie, pulvérisation, sérigraphie, rouleau, ou par jet d'encre.

### EXEMPLE 2 :

### Préparation et application par sérigraphie d'une couche de composition sol-gel SG4, sur laquelle on applique de manière optionnelle une couche incolore de finition SF2.

Les compositions sol-gel SG4 et SF2 sont préparées comme suit :
- on prépare la solution A en introduisant successivement la charge colloïdale (alumine ou silice), l'eau, un alcool (destiné à améliorer la compatibilité des parties A et B) et le ou les pigments ou charges dans un mélangeur planétaire afin d'obtenir la dispersion du pigment et une pâte homogène ;
- on prépare séparément la solution B en mélangeant le ou les silanes avec l'acide organique (acide acétique, acide formique...) ou la base (soude, potasse...) afin de limiter la réactivité du silane. La teneur en acide ou en base est comprise entre 0,1 et 10 % en poids du mélange. Une teneur élevée est avantageuse si on veut augmenter la durée de vie du mélange ;
- les deux solutions A et B peuvent se conserver plus de 6 mois sous cette forme séparée ;
- on réunit ensuite dans un mélangeur les solutions A et B pour créer un mélange intime et permettre la réaction d'hydrolyse. L'opération de brassage peut être rapide en elle-même, mais il est nécessaire de laisser maturer au moins 12 heures ce mélange avant toute application sur le support. La durée de vie en pot du mélange est d'au moins 48 heures.

Le revêtement est appliqué en au moins une couche d'épaisseur de 2 à 40 microns par pulvérisation sur l'une des faces de la plaquette en aluminium. Plusieurs couches peuvent être appliquées successivement, avec un séchage optionnel entre chaque couche.

On peut de manière optionnelle appliquer une couche de la composition de finition sol-gel translucide SF2 sur la ou les couches de composition de revêtement sol-gel SG4 sol-gel colorées décrites ci-dessus. On peut également de manière optionnelle incorporer un décor fonctionnel ou non fonctionnel entre la couche sol-gel colorée SG4 et la couche de finition SF2, de la même manière qu'à l'exemple 1.

### EXEMPLE 3 :

### Réalisation des tests sur les revêtements sol-gels des exemples 1 et 2.

Les propriétés des différents revêtements obtenus par réalisation des tests sur chacun des revêtements sol-gel des exemples 1 (appliqués par sérigraphie) et 2 (appliqués par pulvérisation) sont récapitulées dans le tableau 8 ci-après.

D'après nos tests, on estime que la plage de dureté crayon pour une opération d'emboutissage est réalisable dans la gamme 4B à 4H, et de préférence entre 2B à 2H.

Ces résultats démontrent qu'en maitrisant les conditions de pré-densification (préalable à l'emboutissage) du revêtement sol-gel, on arrive à des résultats très intéressants en terme d'emboutissabilité. De plus, on note qu'il est encore possible d'améliorer la déformabilité de notre système en ajoutant des charges souples, qui joueront le rôle d'absorbeurs de contraintes. Il est ainsi possible d'obtenir des revêtements de type sol-gels emboutissables, présentant donc tous les avantages industriels et décoratifs cités plus haut.

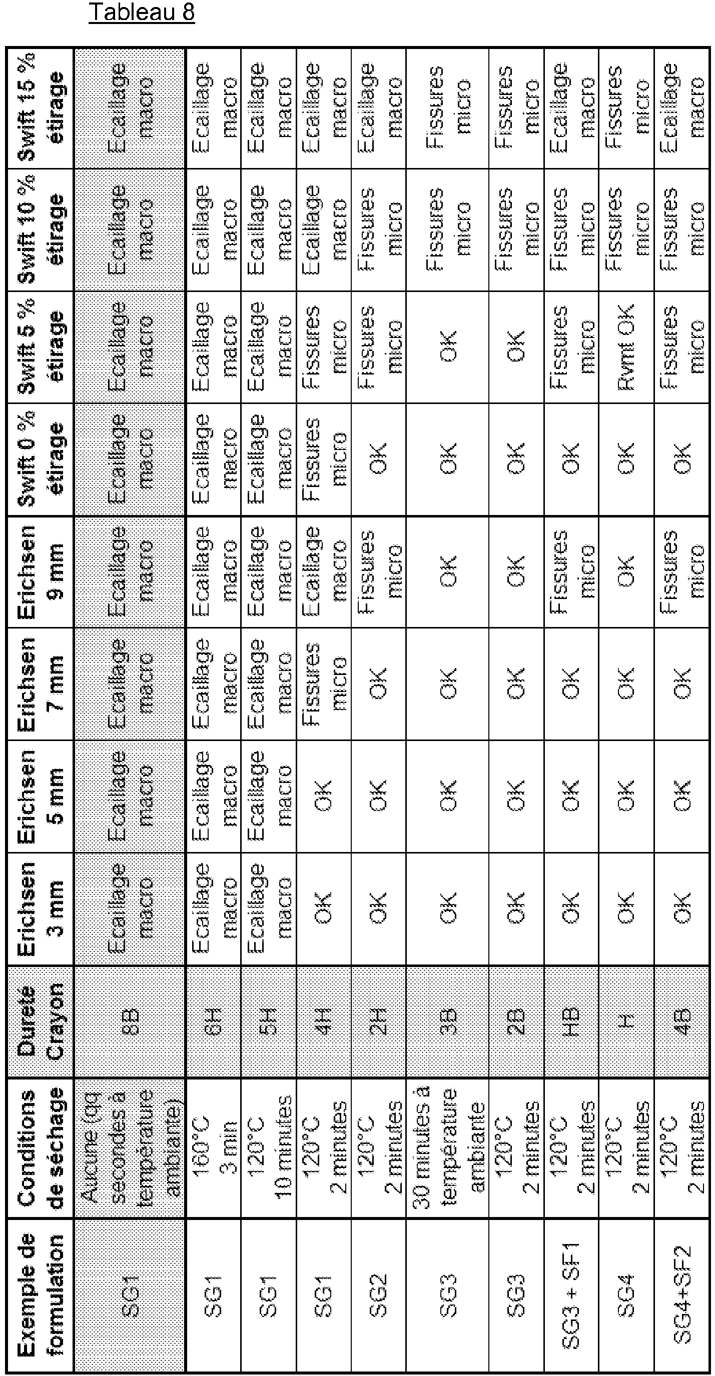

## Revendications

1. Procédé de fabrication d'un article culinaire chauffant, **caractérisé en ce qu'**il comprend les étapes suivantes :
a) une étape de fourniture d'un support sous forme d'une préforme présentant au moins deux faces opposées ;
b) une étape de préparation d'une composition sol-gel comprenant au moins un précurseur sol-gel de type alcoxyde métallique ;
c) une étape d'hydrolyse dudit précurseur sol-gel par introduction d'eau et d'un catalyseur acide ou basique, suivie d'une réaction de condensation ;
d) une étape d'application sur au moins l'une des faces du support d'au moins une couche de ladite composition sol-gel d'épaisseur comprise entre 5 et 120 µm, pour réaliser une couche de revêtement sol-gel ; puis
e) une étape de traitement thermique de solidification de ladite couche de revêtement sol-gel ;
ledit procédé étant **caractérisé en ce qu'**il comprend en outre, entre l'étape d) d'application de la composition sol-gel sur au moins l'une des faces de la préforme et l'étape e) de traitement thermique de solidification, les deux étapes successives suivantes :
d') une étape de pré-densification de la préforme ainsi revêtue pour obtenir une couche de revêtement sol-gel présentant une dureté crayon comprise dans la gamme 4B à 4H ; puis
d") une étape d'emboutissage de ladite préforme jusqu'à obtenir la forme finale de l'article culinaire chauffant, avec une face intérieure apte à recevoir des aliments et une face extérieure destinée à être disposée du côté d'une source de chaleur.

2. Procédé selon la revendication 1, dans lequel l'étape de pré-densification est une étape de séchage à une température comprise entre 20°C et 150°C.

3. Procédé selon la revendication 1 ou 2, dans lequel le précurseur sol-gel de la composition sol-gel répond à la formule générale (1) :
(1) RₙM(OR')₍₄₋ₙ₎, avec :
• R désignant un groupement alkyle ou phényle,
• R' désignant un groupement alkyle,
• M désignant un métal ou un non métal choisi parmi Si, Zr, Ti, Al, V, Ce, ou La, et
• n étant compris entre 0 et 3

4. Procédé selon la revendication 3, dans lequel le précurseur sol-gel de formule générale (1) est un alcoxysilane.

5. Procédé selon la revendication 3 ou 4, dans lequel la composition sol-gel comporte en outre au moins au moins un alcoxyde métallique avec une fonction non hydrolysable.

6. Procédé selon la revendication 5, dans lequel la fonction non hydrolysable est un groupement de type alkyle ou phényle.

7. Procédé selon la revendication 6, dans lequel le groupement alkyle de la fonction non hydrolysable ou le groupement alkyle R de la formule (1) comprend une double liaison éthylénique, une fonction amine ou une fonction époxyde.

8. Procédé selon la revendication 6, dans lequel le groupement alkyle est un groupement méthyle.

9. Procédé selon la revendication 7, dans lequel le groupement alkyle est un groupement choisi parmi l'aminopropyle, le méthacryloxypropyle, le glycidoxypropyle.

10. Procédé selon l'une quelconque des revendications précédentes, dans lequel la composition sol-gel comporte en outre au moins une charge organique ou inorganique

11. Procédé selon la revendication 10, dans lequel ladite charge est une charge organique polymérique choisie par la poudre de PTFE, les billes de silicone, la résine silicone, les polysilsesquioxanes linéaires ou tridimensionnels, la poudre de polysulfure d'éthylène (PES), la poudre de polyétheréthercétone (PEEK), la poudre de polysulfure de phényle (PPS), ou de perfluoropropylvinyléther (PFA), la poudre de polyuréthane et leurs mélanges.

12. Procédé selon la revendication 10, dans lequel ladite charge est une charge inorganique de type charge lubrifiante, se présentant de préférence sous forme de lamelles.

13. Procédé selon la revendication 12, dans lequel ladite charge inorganique est du nitrure de bore, du sulfure de molybdène, ou du graphite.

14. Procédé selon l'une quelconque des revendications précédentes, dans lequel le support est un support métallique en aluminium, ou en acier, notamment inoxydable, ou en cuivre, ou en titane, ou un multicouches des métaux précités.

15. Procédé selon l'une quelconque des revendications précédentes, dans lequel la préforme est un support plan.

16. Procédé selon la revendication 15, dans lequel l'étape d'application de la composition sol-gel sur l'une des faces de la préforme est réalisée par sérigraphie, au rouleau, par jet d'encre, par pulvérisation, ou par rideau.

17. Procédé selon l'une quelconque des revendications précédentes, **caractérisé en ce que** le traitement thermique de solidification e) est une cuisson réalisée à une température comprise entre 150°C et 350°C.

18. Procédé selon l'une quelconque des revendications précédentes, comprenant en outre, préalablement à l'étape d) d'application de la composition sol-gel sur l'un au moins des faces de la préforme, une étape a') de traitement de surface de la face destinée à être revêtue.

## Patentansprüche

1. Verfahren zur Herstellung eines beheizbaren Kochartikels, **dadurch gekennzeichnet, dass** es die folgenden Schritte umfasst:
a) einen Schritt des Bereitstellens eines Trägers in Form eines Vorformlings, der mindestens zwei gegenüberliegende Seiten aufweist;
b) einen Schritt zur Herstellung einer Sol-Gel-Zusammensetzung, umfassend mindestens einen Sol-Gel-Präkursor vom Metallalkoxid-Typ;
c) einen Schritt des Hydrolysierens des Sol-Gel-Präkursors durch Einführen von Wasser und eines sauren oder basischen Katalysators, gefolgt von einer Kondensationsreaktion;
d) einen Schritt des Aufbringens von mindestens einer Schicht der Sol-Gel-Zusammensetzung mit einer Dicke, die zwischen 5 und 120 µm liegt, auf mindestens einer der Seiten des Trägers, um eine Sol-Gel-Deckschicht herzustellen; dann
e) einen thermischen Bearbeitungsschritt zur Verfestigung der Sol-Gel-Deckschicht;
wobei das Verfahren **dadurch gekennzeichnet ist, dass** es ferner zwischen Schritt d) des Aufbringens der Sol-Gel-Zusammensetzung auf mindestens einer der Seiten des Vorformlings und dem thermischen Bearbeitungsschritt zur Verfestigung e) die folgenden zwei aufeinanderfolgenden Schritte umfasst:
d') einen Vorverdichtungsschritt des so beschichteten Vorformlings, um eine Sol-Gel-Deckschicht zu erhalten, die eine Bleistifthärte aufweist, die im Bereich von 4B bis 4H liegt; dann
d") einen Schritt zum Pressen des Vorformlings, um die endgültige Form des beheizbaren Kochartikels zu erhalten, mit einer Innenseite, die angepasst ist, um Nahrungsmittel aufzunehmen, und einer Außenseite, die dazu bestimmt ist, auf der Seite einer Wärmequelle angeordnet zu werden.

2. Verfahren nach Anspruch 1, wobei der Vorverdichtungsschritt ein Trocknungsschritt bei einer Temperatur ist, die zwischen 20 °C und 150 °C liegt.

3. Verfahren nach Anspruch 1 oder 2, wobei der Sol-Gel-Präkursor der Sol-Gel-Zusammensetzung die allgemeine Formel (1) aufweist:
(1) RₙM(OR')₍₄₋ₙ₎, wobei:
• R eine Alkyl- oder Phenylgruppe bezeichnet,
• R' eine Alkylgruppe bezeichnet,
• M ein Metall oder ein Nichtmetall bezeichnet, das aus Si, Zr, Ti, Al, V, Ce, oder La ausgewählt ist, und
• n zwischen 0 und 3 liegt.

4. Verfahren nach Anspruch 3, wobei der Sol-Gel-Präkursor mit der allgemeinen Formel (1) ein Alkoxysilan ist.

5. Verfahren nach Anspruch 3 oder 4, wobei die Sol-Gel-Zusammensetzung ferner mindestens ein Metallalkoxid mit einer nicht-hydrolysierbaren Funktion umfasst.

6. Verfahren nach Anspruch 5, wobei die nicht-hydrolysierbare Funktion eine Gruppe vom Alkyl- oder Phenyl-Typ ist.

7. Verfahren nach Anspruch 6, wobei die Alkylgruppe der nicht-hydrolysierbaren Funktion oder die Alkylgruppe R der Formel (1) eine ethylenische Doppelbindung, eine Aminfunktion oder eine Epoxidfunktion umfasst.

8. Verfahren nach Anspruch 6, wobei die Alkylgruppe eine Methylgruppe ist.

9. Verfahren nach Anspruch 7, wobei die Alkylgruppe eine Gruppe ist, die aus Aminopropyl, Methacryloxypropyl, Glycidoxypropyl ausgewählt ist.

10. Verfahren nach einem der vorhergehenden Ansprüche, wobei die Sol-Gel-Zusammensetzung ferner mindestens einen organischen oder anorganischen Füllstoff aufweist.

11. Verfahren nach Anspruch 10, wobei der Füllstoff ein polymerer organischer Füllstoff ist, der aus Pulver aus PTFE, Siliconkügelchen, Siliconharz, linearen oder dreidimensionalen Polysilsesquioxanen, Pulver aus Ethylenpolysulfid (PES), Pulver aus Polyetheretherketon (PEEK), Pulver aus Phenylpolysulfid (PPS) oder Perfluorpropylvinylether (PFA), Pulver aus Polyurethan und Mischungen davon ausgewählt ist.

12. Verfahren nach Anspruch 10, wobei der Füllstoff ein anorganischer Füllstoff vom schmierender Füllstoff-Typ ist, der vorzugsweise in Form von Lamellen auftritt.

13. Verfahren nach Anspruch 12, wobei der anorganische Füllstoff Bornitrid, Molybdänsulfid oder Graphit ist.

14. Verfahren nach einem der vorhergehenden Ansprüche, wobei der Träger ein Metallträger aus Aluminium oder Stahl, insbesondere Edelstahl, oder Kupfer oder Titan, oder einer Mehrfachschicht aus den vorgenannten Metallen ist.

15. Verfahren nach einem der vorhergehenden Ansprüche, wobei der Vorformling ein ebener Träger ist.

16. Verfahren nach Anspruch 15, wobei der Schritt des Aufbringens der Sol-Gel-Zusammensetzung auf eine der Seiten des Vorformlings durch Siebdruck, mit einer Rolle, durch einen Tintenstrahl, durch Sprühen oder durch einen Schleier durchgeführt wird.

17. Verfahren nach einem der vorhergehenden Ansprüche, **dadurch gekennzeichnet, dass** die Wärmebehandlung zur Verfestigung e) ein Brennen ist, das bei einer Temperatur durchgeführt wird, die zwischen 150 °C und 350 °C liegt.

18. Verfahren nach einem der vorhergehenden Ansprüche, ferner umfassend vor Schritt d) des Aufbringens der Sol-Gel-Zusammensetzung auf mindestens eine der Seiten des Vorformling einen Schritt a') zur Bearbeitung der Oberfläche der Seite, die dazu bestimmt ist, beschichtet zu werden.

## Claims

1. Method of manufacturing a heating culinary item, **characterised in that** it comprises the following steps:
a) a step of providing a support in the form of a preform having at least two opposite faces;
b) a step of preparing a sol-gel composition comprising at least one sol-gel precursor of the metal alkoxide type;
c) a step of hydrolysis of said sol-gel precursor by the introduction of water and an acid or basic catalyst, followed by a condensation reaction;
d) a step of applying on at least one of the faces of the support of at least one layer of said sol-gel composition with a thickness between 5 and 120 µm, in order to create a sol-gel coating layer; then
e) a step of thermal treatment for the solidification of said sol-gel coating layer;
said method being **characterised in that** it further comprises, between the step d) of applying the sol-gel composition on at least one of the faces of the preform and the step e) of the thermal treatment of solidification, the following two successive steps:
d') a step of pre-densifying the preform coated as such in order to obtain a sol-gel coating layer having a pencil hardness within the range 4B to 4H; then d") a step of pressing said preform until obtaining the final form of the heating culinary item, with an inside face able to receive food and an outside face intended to be arranged on the side of a source of heat.

2. Method according to claim 1, wherein the step of pre-densification is a step of drying at a temperature between 20°C and 150°C.

3. Method according to claim 1 or 2, wherein the sol-gel precursor of the sol-gel composition has the general formula (1):
(1) RₙM(OR')₍₄₋ₙ₎, with:
• R designating an alkyl or phenyl group,
• R' designating an alkyl group,
• M designating a metal or a non-metal chosen from Si, Zr, Ti, Al, V, Ce, or La, and
• n being between 0 and 3.

4. Method according to claim 3, wherein the sol-gel precursor having general formula (1) is an alcoxysilane.

5. Method according to claim 3 or 4, wherein the sol-gel composition further comprises at least one metal alkoxide with a non-hydrolysable function.

6. Method according to claim 5, wherein the non-hydrolysable function is a group of the alkyl or phenyl type.

7. Method according to claim 6, wherein the alkyl group of the non-hydrolysable function or the alkyl group R of formula (1) comprises an ethylenic double bond, an amine function or an epoxide function.

8. Method according to claim 6, wherein the alkyl group is a methyl group.

9. Method according to claim 7, wherein the alkyl group is a group chosen from aminopropyl, methacryloxypropyl, glycidoxypropyl.

10. Method according to any preceding claim, wherein the sol-gel composition further comprises at least one organic or inorganic filler.

11. Method according to claim 10, wherein said filler is a polymeric organic filler chosen from PTFE powder, silicone beads, silicone resin, linear or three-dimensional polysilsesquioxanes, polysulphide ethylene (PES) powder, polyetheretherketone (PEEK) powder, polyphenylene sulphide (PPS) or perfluoropropylvinylether (PFA) powder, polyurethane powder and mixtures thereof.

12. Method according to claim 10, wherein said filler is an inorganic filler of the lubricating filler type, having preferably the form of strips.

13. Method according to claim 12, wherein said inorganic filler is boron nitride, molybdenum sulphide, or graphite.

14. Method according to any preceding claim, wherein the support is a metal support made of aluminium, or made of steel, in particular stainless steel, or made of copper, or made from titanium, or a multilayer of the aforementioned metals.

15. Method according to any preceding claim, wherein the preform is a flat support.

16. Method according to claim 15, wherein the step of applying the sol-gel composition onto one of the faces of the preform is carried out by screen printing, with a roller, via ink jet, by spraying, or by curtain.

17. Method according to any preceding claim, **characterised in that** the thermal treatment of solidification e) is a curing carried out at a temperature between 150°C and 350°C.

18. Method according to any preceding claim, further comprising, prior to the step d) of applying the sol-gel composition on at least one of the faces of the preform, a step a') of surface treating of the face intended to be coated.
